# EUROPÄISCHE PATENTSCHRIFT

(11) **EP 4 308 443 B1**
(45) Veröffentlichungstag und Bekanntmachung des Hinweises auf die Patenterteilung: **29.01.2025**
(21) Anmeldenummer: 22710396.7
(22) Anmeldetag: 04.03.2022
(51) Int. Cl.: B62M 6/45

(54) **VERFAHREN UND VORRICHTUNG ZUR STEUERUNG DER SCHIEBEHILFE EINES ELEKTROFAHRRADS**
METHOD AND DEVICE FOR CONTROLLING THE WALK-ASSIST FUNCTION OF AN ELECTRIC BICYCLE
PROCÉDÉ ET DISPOSITIF POUR COMMANDER LA FONCTION D'ASSISTANCE À LA MARCHE D'UN VÉLO ÉLECTRIQUE

(30) Priorität: 15.03.2021 DE 102021202501
(43) Veröffentlichungstag der Anmeldung: 24.01.2024
(73) Patentinhaber: Robert Bosch GmbH, 70442 Stuttgart (DE)
(72) Erfinder: WEINMANN, Matthias, 72336 Balingen (DE); RECK, Joseph, 70794 Filderstadt (DE)
(86) Internationale Anmeldenummer: PCT/EP2022/055617
(87) Internationale Veröffentlichungsnummer: WO 2022/194581

(56) Entgegenhaltungen:
- EP-A2- 2 705 973
- EP-A2- 3 435 094
- DE-B3- 102016 209 570
- JP-A- 2016 008 044

## Beschreibung

Die Erfindung betrifft ein Verfahren und eine Vorrichtung zur Steuerung einer Schiebehilfe für ein Elektrofahrrad sowie ein entsprechend ausgerüstetes Elektrofahrrad.

### Stand der Technik

Bei den mittlerweile weit verbreiteten Elektrofahrrädern besteht neben der Unterstützung der Fortbewegung während des Fahrens mit dem Elektrofahrrad die Möglichkeit, den vorhandenen Antrieb auch in einem Schiebemodus zu aktivieren. Hierdurch wird es dem Nutzer ermöglicht, das Fahrrad, gegebenenfalls mit Gepäck oder über Hindernisse wie Treppen hinweg, zu ohne entsprechenden Kraftaufwand zu bewegen. Um die gesetzlichen Vorgaben einzuhalten, ist vorgesehen, dass die Schiebehilfe das Elektrofahrrad bis maximal 6 km/h antreiben darf, ohne dass der Fahrer in die Pedale tritt. Zur Regelung der Antriebskraft während dieses Schiebemodus' auf die geforderte Maximalgeschwindigkeit wird üblicherweise die Geschwindigkeit des Elektrofahrrads über die am Rad angebrachte Geschwindigkeitserfassung erfasst. Beim Start der Schiebehilfe liegt jedoch in den meisten Fällen noch keine valide Geschwindigkeitserfassung vor.

Aus der Schrift EP 3 251 935 B1 ist eine Schiebehilfe für ein Elektrofahrrad bekannt, bei der ein Übersetzungsverhältnis zwischen Antriebs und Antriebsrad erfasst und für die Regelung des Elektromotors verwendet wird. Dabei wird als Startwert für die Übersetzung vom höchsten möglichen Übersetzungsverhältnis ausgegangen, so dass die resultierende Geschwindigkeit kleiner oder gleich der Maximalgeschwindigkeit für die Schiebehilfe ist.

In den Schriften DE 20 2005 018 126 U1 und DE 20 2005 006 684 U1 wird jeweils ein Anfahrhilfe-Betriebsmodus für ein Elektrofahrrad beschrieben, wobei die Anfahrhilfe auch als Schiebehilfe verwendet werden kann. Die Anfahrhilfe wird durch das Betätigen eines Schalters am Lenker aktiviert. Durch die Aktivierung erzeugt der Elektromotor ein Drehmoment zum Antrieb des Elektrofahrrads ohne Trittunterstützung des Radfahrers. Dadurch resultiert eine Geschwindigkeit des Elektrofahrrads knapp unterhalb oder gleich der gesetzlich vorgegebenen Grenzgeschwindigkeit für eine Anfahr- bzw. Schiebehilfe. In der Schrift DE 20 2005 018 126 U1 weist das Elektrofahrrad zusätzlich eine Gangschaltung zur Änderung des Übersetzungsverhältnisses zwischen der Tretachse und der Hinterradachse auf. Zur Erzeugung einer definierten Geschwindigkeit der Anfahrhilfe wird in ein bekanntes Übersetzungsverhältnis der Gangschaltung gewechselt.

Dokument DE102016209570B3 zeigt die Präambel des Anspruchs 1.

### Offenbarung der Erfindung

Mit der vorliegenden Erfindung wird ein Verfahren und eine Vorrichtung zur Steuerung einer Schiebehilfe eines Elektrofahrrads beansprucht sowie ein Elektrofahrrad, welches eine derartige Schiebehilfe aufweist. Für die Umsetzung der Erfindung ist dabei vorgesehen, dass das Elektrofahrrad einen Antrieb zur Erzeugung der Fortbewegung beziehungsweise eines Vortrieb, eine Geschwindigkeitserfassung sowie eine Gangschaltung zwischen dem Antrieb und dem Antriebsrad aufweist. Das Verfahren, welches die Schiebehilfe steuert, erfasst zunächst mittels der Geschwindigkeitserfassung eine Geschwindigkeitsgröße, die die Geschwindigkeit des Elektrofahrrads repräsentiert. Anschließend wir die Schiebehilfe in Abhängigkeit sowohl der Geschwindigkeitsgröße als auch von dem in Abhängigkeit von der Geschwindigkeitsgröße bestimmten Übersetzungsverhältnis zwischen Antrieb und Antriebsrad beziehungsweise Hinterrad gesteuert. Der Kern der Erfindung besteht dabei darin, dass nach der Aktivierung der Schiebehilfe zunächst eine die Drehbewegung des Antriebs repräsentierende Größe erfasst wird und die Schiebehilfe in Abhängigkeit der erfassten Drehbewegung beziehungsweise der Drehbewegungsgröße gesteuert und/oder geregelt wird.

Der Vorteil der vorstehenden Steuerung besteht dabei darin, das durch die erfasste Drehbewegung des Antriebs erkannt werden kann, wie das Elektrofahrrad vor oder nach dem Aktivieren des Schiebehilfe bewegt wird. Abhängig von dieser Bewegung kann die Schiebehilfe derart angesteuert werden, dass dem Nutzer keine zu langsame oder sogar fehlende Unterstützung zur Verfügung steht.

In einer Weiterbildung der Erfindung ist vorgesehen, dass als Drehbewegung die Drehzahl und insbesondere die Drehrichtung des Antriebs erfasst wird. Hierzu wird davon ausgegangen, dass eine positive Drehbewegung vorliegt, wenn der Antrieb derart angesteuert wird, dass er eine Fortbewegung des Elektrofahrrads in Längsrichtung erzeugt. Erkennt das erfindungsgemässe Verfahren oder die entsprechende Vorrichtung, dass die Drehbewegung eine negative Drehrichtung aufweist, so kann davon ausgegangen werden, dass sich das Elektrofahrrad rückwärts bewegt und durch die Kette den Antriebe entsprechend in negativer Drehrichtung dreht. In diesem Fall wird bei der Steuerung der Schiebehilfe auf ein vorgegebenes Übersetzungsverhältnis zurückgegriffen, zumindest bei der Erstansteuerung zum Start der Schiebehilfe. Hierbei kann optional das größte Übersetzungsverhältnis zwischen Antrieb und Antriebsrad beziehungsweise Hinterrad angenommen werden.

Wurde die Schiebehilfe bereits vor dieser Aktivierung verwendet, so kann gegebenenfalls das Übersetzungsverhältnis dieser vorherigen Verwendung für die Erstansteuerung verwendet werden, bevor aus den validen Sensordaten aktuelle Übersetzungsverhältnisse bestimmt werden können. So kann beispielweise geprüft werden, ob die vorherige Verwendung der Schiebehilfe innerhalb eines vorgegebene Zeitraums, zum Beispiel 10 s, oder einer vorgegebenen Strecke, zum Beispiel 5 m, deaktiviert wurde. Bei einem derartigem Fall kann für die Steuerung der Schiebehilfe und insbesondere für die Startbedingung der Ansteuerung der Schiebehilfe als vorgegebenes Übersetzungsverhältnis das zuletzt bestimmte Übersetzungsverhältnis verwendet werden.

Wird dagegen erkannt, dass der Antrieb nach der Aktivierung in positiver Drehrichtung bewegt wird, kann in Abhängigkeit von der erfassten Geschwindigkeitsgröße das aktuelle Übersetzungsverhältnis bestimmt und für die Steuerung der Schiebehilfe verwendet werden. Alternativ oder zusätzlich kann das Übersetzungsverhältnis auch mittels eines gesonderten Sensors erfasst werden.

Die Bestimmung oder Erfassung des aktuellen Übersetzungsverhältnisses kann zudem abhängig vom einem Vergleich der Drehzahl des Antriebs mit einem Schwellenwert erfolgen. Dabei kann beispielsweise die Verwendung des aktuellen Übersetzungsverhältnisses davon abhängig gestaltet werden, dass die Drehzahl einen vorgegebene Schwellenwert überschreitet.

Weitere Vorteile ergeben sich aus der nachfolgenden Beschreibung von Ausführungsbeispielen bzw. aus den abhängigen Patentansprüchen.

### Kurze Beschreibung der Zeichnungen

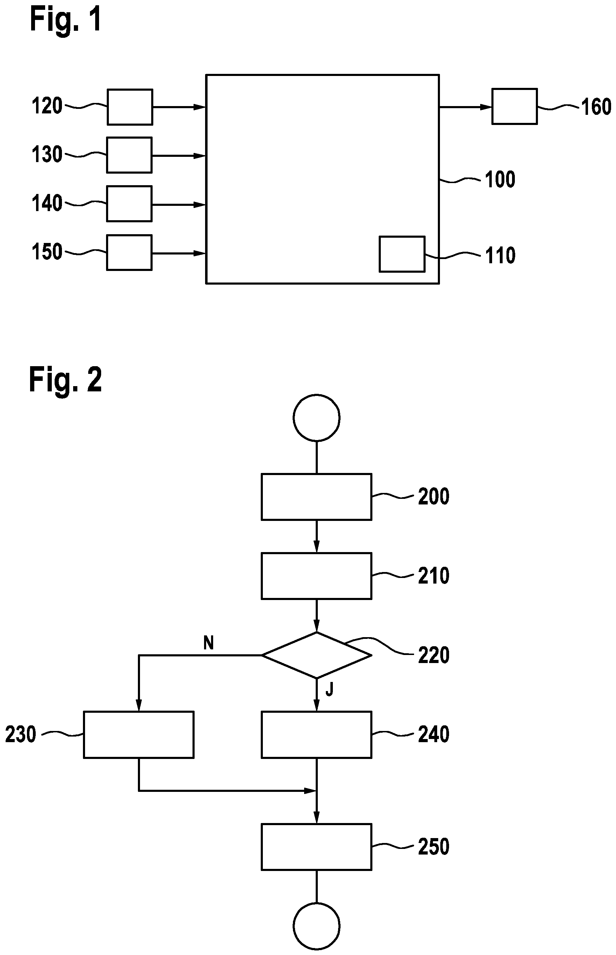

In der Figur 1 wird schematisch anhand eines Blockschaltbildes eine Vorrichtung beschrieben, die ein erfindungsgemäßes Verfahren gemäß dem Flussdiagramm der Figur 2 ausführt.

### Ausführungsformen der Erfindung

Zur Überwachung der Geschwindigkeit eines Elektrofahrrads kann das Übersetzungsverhältnis zwischen dem Antrieb und dem Antriebsrad beziehungsweise des Hinterrads bei der Ansteuerung einer Schiebehilfe verwendet werden, um die Auswirkung der vom Antrieb erzeugten Motordrehzahl auf den Vortrieb zu berücksichtigen. Dabei kann sowohl ein internes Getriebe als auch die Gangschaltung am Elektrofahrrad für die Ermittlung des Übersetzungsverhältnisses herangezogen worden.

Beim Start der Schiebehilfe wird aufgrund des zu diesem Zeitpunkt noch nicht vorliegenden Geschwindigkeitswerts des Elektrofahrrads die Motordrehzahl des Antriebs zunächst langsam erhöht, bis die Geschwindigkeitserfassung eine Größe liefert, mit der der eingelegte Gang bestimmt werden kann. Gerade bei kleinen Geschwindigkeiten um 4-5 km/h, die beim Schieben des Fahrrads üblich sind, kann es länger dauern, bis diese Geschwindigkeitsgröße vorliegt, so dass der Nutzer beim Anschieben weniger Unterstützung erhält, die erst nach einiger Zeit erhöht wird.

Auch eine falsche Erzeugung einer Geschwindigkeitsgröße kann zu einem Nachteil beim Anfahren mit der Schiebehilfe führen. Befindet sich das Elektrofahrrad während des Anschiebens am Berg, kann es vorkommen, dass durch das Zurückrollen mit nachfolgender Vorwärtsbewegung durch die Geschwindigkeitserfassung eine Geschwindigkeitsgröße erfasst wird, welche eine zu hohe Geschwindigkeit des Fahrrads signalisiert. Hierdurch würde in Verbindung mit dem hochfahren der Motordrehzahl zu einer falschen und viel zu großen Bestimmung des Übersetzungsverhältnisses. Als Resultat würde die Leistung des Antriebs reduziert oder noch langsam hochgefahren, so dass zunächst eine noch geringere oder im Extremfall gar keine Unterstützung durch die Schiebehilfe am Anschieben vorliegt. Erst durch die neuerliche Bestimmung der Geschwindigkeit mittels der Geschwindigkeitserfassung kann erkannt werden, dass das eingestellte Übersetzungsverhältnis geringer ist, so dass die Antriebsleistung für die Schiebehilfe erhöht werden kann und der Nutzer die Wunschgeschwindigkeit erreicht.

Die nachfolgende Erfindung beschreibt dabei ein Verfahren sowie eine Erfindung, mit der diese Rückwärtsbewegung erkannt werden kann, um in diesem Fall die Verwendung ein falsches Übersetzungsverhältnis zu verhindern.

Im Blockschaltbild der Figur 1 ist schematisch eine mögliche Vorrichtung dargestellt, mittels der die Erfindung realisiert werden kann. Hierbei ist eine Steuereinheit 100 vorgesehen, die optional einen Speicher 110 aufweisen kann. Die Steuereinheit 100 erfasst über eine entsprechende Eingabe 120 die Aktivierung der Schiebehilfe, zum Beispiel in Form einer Anforderung des Fahrers oder Nutzers. Weiterhin wird die Drehrichtung des Motors 130 sowie wenigstens eine Geschwindigkeitsgröße oder auch nur ein Impuls einer Geschwindigkeitserfassung 140 erfasst. Bei der Geschwindigkeitserfassung kann es sich beispielsweise um einen Magnetsensor handeln, der in Abhängigkeit der Annäherung eines Magneten in einem der Räder einen Impuls abgibt. In einer weiteren Ausgestaltung kann vorgesehen sein, dass mittels eines Kadenzsensors eine Information über die Bewegungsrichtung des Elektrofahrrads erfasst wird. Optional kann vorgesehen sein, dass ein Mittel 150 vorgesehen ist, das das Übersetzungsverhältnis der Gangschaltung erfasst oder das letzte bestimmte Übersetzungsverhältnis der Steuereinheit 100 zur Verfügung stellt. Basierend auf der erfassten Aktivierung und der erfassten Drehrichtung des Motors 130 oder einer anderen Information, die das Rückwärtsbewegen des Elektrofahrrads repräsentiert ermittelt die Steuereinheit 100, ob die von der Geschwindigkeitserfassung 140 erfassten Geschwindigkeitsgrößen für die Ansteuerung der Schiebehilfe des Antriebs 160 verwendet werden sollen. Hierzu wird in der Figur 2 anhand eines Flussdiagramms ein entsprechendes Verfahren beschrieben.

Das Verfahren der Figur 2 kann beispielsweise nach der Erkennung der Aktivierung der Schiebehilfe gestartet werden. Hierbei kann sowohl eine Aktivierung durch den Fahrer beziehungsweise Nutzers oder eine automatische Erkennung aufgrund der Begleitumstände vorliegen. In einem ersten Schritt 200 des Verfahrens wird mittels der Geschwindigkeitserfassung 140 eine Geschwindigkeitsgröße erfasst. Bei der Geschwindigkeitsgröße handelt es sich üblicherweise um einen Magnetsensor, der ein Reed-Signal erzeugt, d.h. wenigstens zwei Impulse, die in einem zeitlichen Abstand voneinander erfasst werden und ein Maß für die Geschwindigkeit des Elektrofahrrads darstellen. Anschließend wird im nächsten Schritt 210 die Drehrichtung des Motors des Antriebs erfasst, vorteilhafterweise zeitgleich zur Erfassung der Geschwindigkeitsgröße im Schritt 200. Im nachfolgenden Schritt 220 wird geprüft, ob der Motor vorwärts oder rückwärts dreht. Durch die Verbindung mittels der Kette vom Hinterrad zur Tretkurbel wird bei einer Rückwärtsbewegung des Fahrrads die Kette bewegt und somit der Motor des Antriebs gedreht. Alternativ oder zusätzlich kann zur Erkennung der Drehrichtung des Motors auch ein Kadenzsensor verwendet werden. Der Kadenzsensor kann insbesondere zum Einsatz kommen, wenn der Motor mit einem Freilauf ausgestattet ist. Wird dabei im Schritt 220 erkannt, dass sich der Motor nicht in negativer Richtung dreht, das heißt, in positiver Drehrichtung, die bei einer Erzeugung eines Vortriebs vorliegt, wird die Schiebehilfe mit dem Schritt 230 angesteuert, ansonsten mit dem Schritt 240. Im Schritt 230 wird dabei die Erstansteuerung der Schiebehilfe beziehungsweise die Aktivierungssteuerung basierend auf der erfassten aktuellen Geschwindigkeitsgröße und mit dem auf dieser Geschwindigkeitsgröße basierendem Übersetzungsverhältnis angesteuert. Solange jedoch noch keine neue aktuelle Geschwindigkeitsgröße erfasst wird, z.B. solange noch keine zwei Reed-Signale vorliegen, wird das zuletzt bestimmte und abgespeicherte Übersetzungsverhältnis für die Erstansteuerung der Schiebehilfe verwendet. Anschließend kann in einem weiteren Schritt 250 die weitere Steuerung beziehungsweise Regelung der Schiebehilfe gemäß bekannter Verfahren erfolgen. Hierbei kann wie vorstehend bereits ausgeführt, die Steuerung oder Regelung in Abhängigkeit von dem aktuellen Übersetzungsverhältnis erfolgen, welches bestimmt oder erfasst werden kann.

Wird im Schritt 220 jedoch erkannt, dass der Motor eine negative Drehrichtung aufweist, kann daraus geschlossen werden, dass sich das Elektrofahrrad zunächst rückwärts bewegt. Mit dieser Erkenntnis wird im Schritt 240 die aktuell erfassten Geschwindigkeitsgröße beziehungsweise die aus dieser Größe abgeleitet (Fahrrad-)Geschwindigkeit ignoriert beziehungsweise es wird kein Übersetzungsverhältnis basierend auf dieser Geschwindigkeitsgröße abgeleitet. Stattdessen erfolgt die Erstansteuerung der Schiebehilfe basierend auf einem abgespeicherten oder dem letzten abgeleiteten Übersetzungsverhältnis. Hierbei kann optional auch das abgespeicherte oder zuletzt abgeleitete Übersetzungsverhältnis abhängig von der zurückgelegten Strecke oder der Zeitdauer nach Deaktivierung der letzten Schiebehilfeunterstützung berücksichtigt werden. So ist beispielsweise denkbar, dass nach einer erneuten Aktivierung der Schiebehilfe seit der letzten Deaktivierung innerhalb von 5 oder 10 s kein neuer Gangwechsel stattgefunden hat, insbesondere nicht, wenn in der Zwischenzeit keine aktive Trettätigkeit erfasst worden ist. Gleiches gilt für eine zurückgelegte Wegstrecke, zum Beispiel indem die Anzahl der Radumdrehungen erfasst wird. Nach dem Schritt 220 kann die Schiebehilfe anschließend im Schritt 250 gemäß der üblichen Steuer- und/oder Regelungsverfahren betrieben werden.

Optional kann ich Schritt 220 auch geprüft werden, ob die Drehzahl des Motors in positiver Drehrichtung einen Schwellenwert überschreitet. Ist das nicht der Fall, kann die aktuell erfasste Geschwindigkeitsgröße oder das darauf abgeleitete Übersetzungsverhältnis im Schritt 240 für die Erstansteuerung ignoriert werden. Wird jedoch erkannt, dass die positive Drehzahl oberhalb eines vorgegebene und/oder abgespeicherten Schwellenwerts liegt, kann erkannt werden, dass sich das Elektrofahrrad sowohl in Vorwärtsrichtung bewegt als auch eine ausreichende Unterstützung der Schiebehilfe bereit stellt.

In diesem Fall wird das Verfahren mit dem Schritt 230 weiter verfolgt.

## Patentansprüche

1. Verfahren zur Steuerung einer Schiebehilfe eines Elektrofahrrads, wobei das Elektrofahrrad
• einen Antrieb (160), durch einen Elektromotor, zur Erzeugung eines Vortriebs des Elektrofahrrads, und
• eine Geschwindigkeitserfassung (140), und
• eine Gangschaltung zwischen Antrieb (160) und Antriebsrad aufweist, wobei das Verfahren
• mittels der Geschwindigkeitserfassung (140) eine die Geschwindigkeit des Elektrofahrrads repräsentierende Geschwindigkeitsgröße erfasst, und
• die Schiebehilfe in Abhängigkeit der erfassten Geschwindigkeitsgröße und einem Übersetzungsverhältnis zwischen Antrieb (160) und Antriebsrad steuert, und nach Aktivierung der Schiebehilfe
• eine Drehbewegung des Antriebs (160) erfasst und
• in Abhängigkeit der erfassten Drehbewegung die Steuerung der Schiebehilfe startet,
wobei das Verfahren als Drehbewegung eine Drehrichtung des Antriebs (160) erfasst und eine positive Drehrichtung erkannt wird, wenn der Antrieb (160) einen Vortrieb erzeugt, **dadurch gekennzeichnet, dass** das Verfahren
• bei einer erfassten negativen Drehrichtung des Antriebs (160) die Schiebehilfe in Abhängigkeit eines vorgegebenen Übersetzungsverhältnisses ansteuert, insbesondere zur initialen Steuerung, und
• bei einer erfassten positiven Drehrichtung des Antriebs (160) zur Steuerung der Schiebehilfe in Abhängigkeit der erfassten Geschwindigkeitsgröße ein Übersetzungsverhältnis bestimmt und die Schiebehilfe in Abhängigkeit des bestimmten Übersetzungsverhältnisses ansteuert.

2. Verfahren nach Anspruch 1, **dadurch gekennzeichnet, dass** das Verfahren als vorgegebenes Übersetzungsverhältnis das größte Übersetzungsverhältnis der Gangschaltung verwendet.

3. Verfahren nach Anspruch 1 oder 2, **dadurch gekennzeichnet, dass** das Verfahren
• die Zeitdauer seit der Beendigung der letzten Ausführung der Schiebehilfe erfasst und
• in Abhängigkeit von der erfassten Zeitdauer als vorgegebenes Übersetzungsverhältnis das bei der letzten Ausführung der Schiebehilfe bestimmte Übersetzungsverhältnis der Gangschaltung verwendet.

4. Verfahren nach Anspruch 1 oder 2, **dadurch gekennzeichnet, dass** das Verfahren
• die zurückgelegte Strecke seit der Beendigung der letzten Ausführung der Schiebehilfe erfasst und
• in Abhängigkeit von der zurückgelegten Strecke als vorgegebenes Übersetzungsverhältnis das bei der letzten Ausführung der Schiebehilfe bestimmte Übersetzungsverhältnis der Gangschaltung verwendet.

5. Verfahren nach einem der vorhergehenden Ansprüche, **dadurch gekennzeichnet, dass** das Verfahren
• die Drehzahl des Antriebs (160) erfasst und
• in Abhängigkeit eines Vergleichs der Drehzahl mit einem Schwellenwert die Schiebehilfe in Abhängigkeit des mittels der erfassten Geschwindigkeitsgröße bestimmten Übersetzungsverhältnisses ansteuert, insbesondere zur initialen Steuerung.

6. Verfahren nach Anspruch 5, **dadurch gekennzeichnet, dass** der Vergleich das Überschreiten des Schwellenwerts durch die Drehzahl prüft.

7. Vorrichtung mit einer Steuereinheit (100) zur Steuerung einer Schiebehilfe eines Elektrofahrrads, wobei das Elektrofahrrad
• einen Antrieb (160) zur Erzeugung eines Vortriebs des Elektrofahrrads, und
• eine Geschwindigkeitserfassung (130), und
• eine Gangschaltung zwischen Antrieb (160) und Antriebsrad aufweist, wobei die Steuereieinheit (100) ein Verfahren nach einem der Ansprüche 1 bis 6 ausführt.

8. Elektrofahrrad mit einer Vorrichtung nach Anspruch 7.

## Claims

1. Method for controlling a pushing aid on an electric bicycle, wherein the electric bicycle has
• a drive (160), by way of an electric motor, for generating a propulsion for the electric bicycle, and
• a velocity sensing system (140), and
• a gearbox between the drive (160) and the drive wheel,
wherein the method
• uses the velocity sensing system (140) to record a velocity variable representing the velocity of the electric bicycle, and
• controls the pushing aid according to the recorded velocity variable and a gear ratio between the drive (160) and the drive wheel, and, after activating the pushing aid,
• detects a rotational movement of the drive (160) and
• takes the detected rotational movement as a basis for starting control of the pushing aid,
wherein the method detects a direction of rotation of the drive (160) as the rotational movement, and a positive direction of rotation is identified when the drive (160) generates a propulsion, **characterized in that** the method
• responds to a detected negative direction of rotation of the drive (160) by actuating the pushing aid according to a predetermined gear ratio, in particular for initial control, and
• responds to a detected positive direction of rotation of the drive (160) by, in order to control the pushing aid, taking the recorded velocity variable as a basis for determining a gear ratio and actuating the pushing aid according to the determined gear ratio.

2. Method according to Claim 1, **characterized in that** the method uses the gearbox's highest gear ratio as the predetermined gear ratio.

3. Method according to Claim 1 or 2, **characterized in that** the method
• records the time since the last implementation of the pushing aid was completed and
• takes the recorded time as a basis for using the gearbox's gear ratio determined for the last implementation of the pushing aid as the predetermined gear ratio.

4. Method according to Claim 1 or 2, **characterized in that** the method
• records the distance travelled since the last implementation of the pushing aid was completed and
• takes the distance travelled as a basis for using the gearbox's gear ratio determined for the last implementation of the pushing aid as the predetermined gear ratio.

5. Method according to one of the preceding claims, **characterized in that** the method
• detects the speed of the drive (160) and
• takes a comparison of the speed with a threshold value as a basis for actuating the pushing aid according to the gear ratio determined by means of the recorded velocity variable, in particular for initial control.

6. Method according to Claim 5, **characterized in that** the comparison tests for the threshold value being exceeded by the speed.

7. Device having a control unit (100) for controlling a pushing aid on an electric bicycle, wherein the electric bicycle has
• a drive (160) for generating a propulsion for the electric bicycle, and
• a velocity sensing system (130), and
• a gearbox between the drive (160) and the drive wheel,
wherein the control unit (100) carries out a method according to one of Claims 1 to 6.

8. Electric bicycle having a device according to Claim 7.

## Revendications

1. Procédé permettant de commander une aide à la poussée d'un vélo électrique, le vélo électrique présentant
• un dispositif d'entraînement (160), par un moteur électrique, pour générer une propulsion du vélo électrique, et
• un dispositif de détection de vitesse (140), et
• un dispositif de changement de vitesse entre le dispositif d'entraînement (160) et une roue motrice,
dans lequel le procédé
• détecte au moyen du dispositif de détection de vitesse (140) une grandeur de vitesse représentant la vitesse du vélo électrique, et
• commande l'aide à la poussée en fonction de la grandeur de vitesse détectée et d'un rapport de transmission entre le dispositif d'entraînement (160) et la roue motrice, et après activation de l'aide à la poussée,
• détecte un mouvement de rotation du dispositif d'entraînement (160), et
• démarre la commande de l'aide à la poussée en fonction du mouvement de rotation détecté,
dans lequel le procédé détecte en tant que mouvement de rotation un sens de rotation du dispositif d'entraînement (160), et un sens de rotation positif est identifié si le dispositif d'entraînement (160) génère une propulsion, **caractérisé en ce que** le procédé
• lorsqu'un sens de rotation négatif du dispositif d'entraînement (160) est détecté, pilote l'aide à la poussée en fonction d'un rapport de transmission prédéfini, en particulier pour une commande initiale, et
• lorsqu'un sens de rotation positif du dispositif d'entraînement (160) est détecté, détermine un rapport de transmission pour commander l'aide à la poussée en fonction de la grandeur de vitesse détectée et pilote l'aide à la poussée en fonction du rapport de transmission déterminé.

2. Procédé selon la revendication 1, **caractérisé en ce que** le procédé utilise en tant que rapport de transmission prédéfini le plus grand rapport de transmission du dispositif de changement de vitesse.

3. Procédé selon la revendication 1 ou 2, **caractérisé en ce que** le procédé
• détecte la durée depuis la fin de la dernière exécution de l'aide à la poussée, et
• en fonction de la durée détectée, utilise en tant que rapport de transmission prédéfini le rapport de transmission du dispositif de changement de vitesse déterminé lors de la dernière exécution de l'aide à la poussée.

4. Procédé selon la revendication 1 ou 2, **caractérisé en ce que** le procédé
• détecte le trajet parcouru depuis la fin de la dernière exécution de l'aide à la poussée, et
• en fonction du trajet parcouru, utilise en tant que rapport de transmission prédéfini le rapport de transmission du dispositif de changement de vitesse déterminé lors de la dernière exécution de l'aide à la poussée.

5. Procédé selon l'une quelconque des revendications précédentes, **caractérisé en ce que** le procédé
• détecte la vitesse de rotation du dispositif d'entraînement (160), et
• pilote en fonction d'une comparaison de la vitesse de rotation avec une valeur seuil l'aide à la poussée en fonction du rapport de transmission déterminé au moyen de la grandeur de vitesse détectée, en particulier pour la commande initiale.

6. Procédé selon la revendication 5, **caractérisé en ce que** la comparaison vérifie le dépassement de la valeur seuil par la vitesse de rotation.

7. Dispositif comprenant une unité de commande (100) pour commander une aide à la poussée d'un vélo électrique, dans lequel le vélo électrique présente
• un dispositif d'entraînement (160) pour générer une propulsion du vélo électrique, et
• un dispositif de détection de vitesse (130), et
• un dispositif de changement de vitesse entre le dispositif d'entraînement (160) et une roue motrice,
dans lequel l'unité de commande (100) exécute un procédé selon l'une quelconque des revendications 1 à 6.

8. Vélo électrique comprenant un dispositif selon la revendication 7.
